Europäisches Patentamt

European Patent Office

Office européen des brevets

(19)

(11) Publication number: **0 139 763 B1**

(12) **EUROPEAN PATENT SPECIFICATION**
**published in accordance with Art.**
**158(3) EPC**

(45) Date of publication of patent specification: **19.06.91**    (51) Int. Cl.⁵: **B23H 7/20**

(21) Application number: **84901396.6**

(22) Date of filing: **28.03.84**

(86) International application number:
**PCT/JP84/00143**

(87) International publication number:
**WO 84/03853 (11.10.84 84/24)**

(54) **MACHINING CONDITION SETTING SYSTEM FOR WIRE-CUT ELECTRIC DISCHARGE MACHINE.**

(30) Priority: **28.03.83 JP 52021/83**

(43) Date of publication of application:
**08.05.85 Bulletin 85/19**

(45) Publication of the grant of the patent:
**19.06.91 Bulletin 91/25**

(84) Designated Contracting States:
**CH DE FR GB LI**

(56) References cited:
**JP-A- 521 797**
**JP-A- 5 145 400**
**JP-A-57 114 325**

(73) Proprietor: **FANUC LTD.**
**3580, Shibokusa Aza-Komanba, Oshino-mura**
**Minamitsuru-gun, Yamanashi 401-05(JP)**

(72) Inventor: **SHIMAJIRI, Tokiji**
**6-11-3, Ikuta Tama-ku, Kawasaki-shi**
**Kanagawa 214(JP)**
Inventor: **OBARA, Haruki**
**844-7, Hashimoto Sagamihara-shi**
**Kanagawa 229(JP)**
Inventor: **KINOSHITA, Mitsuo**
**1755-328, Horinouchi Hachioji-shi**
**Tokyo 192-03(JP)**

(74) Representative: **Billington, Lawrence Emlyn et**
**al**
**HASELTINE LAKE & CO Hazlitt House 28**
**Southampton Buildings Chancery Lane**
**London WC2A 1AT(GB)**

## Description

This invention relates to a wire-cut electric discharge machining system in which machining conditions are retrieved for a wire-cut electric discharge machine.

A wire-cut electric discharge machine operates by applying a predetermined voltage across a gap formed between a longitudinally travelling wire electrode and a workpiece which is to be machined thus to generate a spark discharge between the wire electrode and the workpiece for cutting away the workpiece in small increments by means of the discharge energy, and moving the workpiece and wire electrode relative to each other on the basis of command data issued by a numerical control unit to machine the workpiece into a desired shape. In a wire-cut electric discharge machine of this kind, machining conditions change depending upon the workpiece material and thickness, the diameter of the wire electrode used, etc. Such machining conditions are the voltage impressed across the aforementioned gap, the value of the peak current flowing across the gap, the mean voltage, the duty of the pulses applied across the gap, the tension to which the wire electrode is subjected and the specific resistance of a machining fluid which is present in the gap. The operator of the wire-cut electric discharge machine gives consideration to the material and thickness of the workpiece to be machined, the diameter of the wire electrode used and the like, selects optimum established values from a manual for electric discharge machining, and then jots down these values on paper. The operator subsequently sets these numerical values for the various operating sections of the wire-cut electric discharge machine while reading the established values from the paper on which they are written.

Thus, in the conventional wire-cut electric discharge machine, one must take the trouble to prepare note paper for setting the established values. In addition to requiring considerable time for the settings, this procedure can result in misentries when one transcribes the data. There are also instances where the procedure leads to erroneous operation of the various operating sections of the wire-cut electric discharge machine.

JP-A-57-114325 discloses a wire-cut electric discharge machining system comprising a wire-cut electric discharge machine, a numerical control unit for controlling the machine, a manual input unit coupled to the numerical control unit for sending input signals thereto, and a CRT display unit coupled to the manual input unit, wherein the numerical control unit comprises a processor and a machining condition memory by means of which an operator may retrieve stored machining conditions in dependence upon entering via the manual input unit designated conditions relating to a wire-cutting process, these designated conditions including wire electrode thickness and workpiece material.

The retrieved stored conditions are merely displayed, these being a plurality of displayed condition groups from which the operator must select a particular group depending upon other conditions.

According to the present invention the entered designated conditions further include workpiece thickness and the machining condition memory stores machining conditions in separate single records such that the processor is operable to retrieve and set a uniquely defined group of machining conditions corresponding to the entered designated conditions and providing a single value of each of these machining conditions when electric discharge machining is performed, and the numerical control unit is operable to set automatically, for operating sections of the wire-cut electric discharge machine, the machining conditions retrieved as aforesaid.

With the aid of the present invention the operator merely enters designated conditions such as the material and thickness of a workpiece and the diameter of the wire electrode to enable automatic retrieval of machining conditions commensurate with the designated conditions which have been entered.

A preferred embodiment of the present invention may provide a machining condition setting system of a wire-cut electric discharge machine in which the operator merely enters designated conditions such as the material and thickness of a workpiece and the diameter of the wire electrode to enable machining conditions commensurate with the entered designated conditions to be set automatically for each of the operating sections of the machine.

According to a preferred embodiment of the present invention, the operator of a wire-cut electric discharge machine automatically sets appropriate machining conditions for each of the operating sections of the electric discharge machine merely by entering designated conditions such as the workpiece material. To this end, the invention is equipped with a control unit for setting machining conditions for each of the operating sections of the wire-cut electric discharge machine. The control unit is provided with a memory in which are stored a plurality of records for each of different designated conditions, each single record comprising designated conditions based on workpiece material, workpiece thickness, wire electrode diameter and possibly, but not essentially capacitance of a capacitor, and data consisting of machining conditions corresponding to the designated conditions. The arrangement is such that when predetermined designated conditions are applied to the control unit, the latter reads machining conditions corresponding to these designated conditions out of the memory and automatically sets these read machining conditions for the various operating sections of the wire-cut electric discharge machine. Therefore, according to this preferred embodiment of the present invention, the operator of the wire-cut electric discharge apparatus merely provides the control unit with inputs of four designated conditions, namely the material and thickness of the workpiece, the diameter of the wire electrode and the capacitance of the capacitor, whereby machining conditions commensurate with these entered designated conditions are selected and automatically set for the operating mechanisms of the wire-cut electric discharge machine. Hence, the present invention does away with the troublesome task of transcribing to paper machining conditions corresponding to designated conditions, as is required in the prior art, thereby eliminating copying errors and erroneous setting operations.

Brief Description of the Drawings

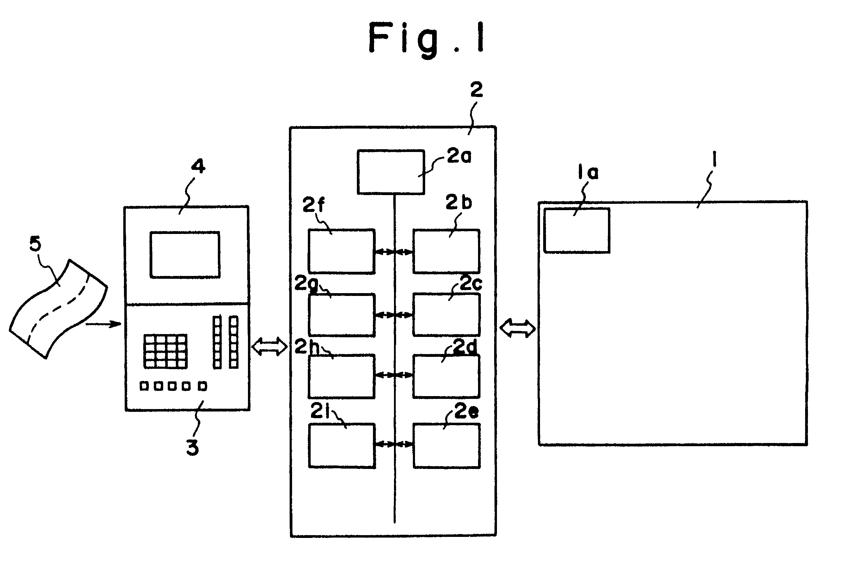

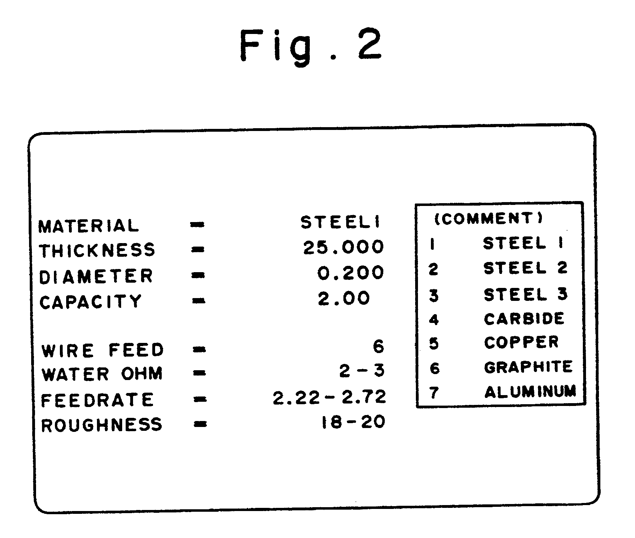

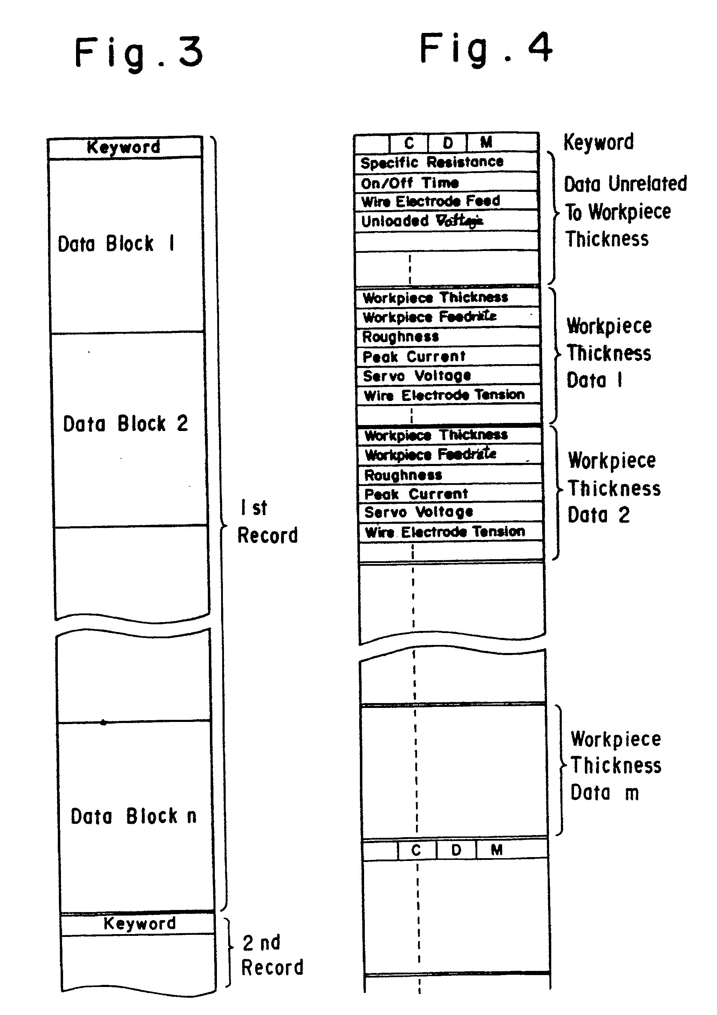

Fig. 1 is a block diagram illustrating the simplified construction of a wire-cut electric discharge machine for practicing the present invention, Fig. 2 is a front view showing an example of what appears on a screen of a CRT display unit, Fig. 3 is a view showing the configuration of one record, and Fig. 4 is a view showing an array of data in one record.

To set forth the invention is greater detail, the invention will now be described on the basis of an embodiment shown in the accompanying drawings.

Fig. 1 is a block diagram illustrating the simplified construction of a wire-cut electric discharge machine. The wire-cut electric discharge machine system comprises a wire-cut electric discharge machine 1, a control unit 2 for controlling the wire-cut electric discharge machine 1, and a manual input unit 3 for sending input signals to the control unit 2. The wire-cut electric discharge machine 1 has a mechanism for running a wire electrode longitudinally thereof, a mechanism for establishing relative movement between a workpiece and the wire electrode, a source of voltage for impressing a voltage across the wire electrode and workpiece, a device for controlling the voltage source, and a device for supplying the machining section with a machining fluid. The machine is also equipped with operating sections for regulating the discharge voltage, machining current, pulse width of a pulsating current flowing through a discharge circuit, and both the travelling speed and tension of the wire electrode, and with a meter relay for monitoring the specific resistance of the machining fluid. Also provided are a group of capacitors and a switching circuit employed in the discharge circuitry. Further, the wire-cut electric discharge machine 1 is provided with an operator's panel 1a equipped with dials for controlling mechanical systems other than a table, and for controlling a machining power supply. The control unit 2 is constructed in the form of a well-known computerized numerical control device and includes a processor 2a, machining program member 2b for storing a machining program, a working memory 2c for storing a machining starting point of the wire-cut electric discharge machine 1 as well as the results of processing performed by the processor 2a, a control program memory 2d for storing a control program, a pulse distributor 2e, a data output device 2f for delivering a command signal from the control unit 2 to the wire-cut electric discharge machine 1, a data input device 2g for feeding data from the wire-cut electric discharge machine to the control unit 2, and a servo circuit 2h responsive to pulses received from the pulse distributor 2e to change the relative position between a workpiece and the wire electrode of the wire-cut electric discharge machine 1. Also provided is a machining condition memory 2i in which are stored, in the form of a list, data indicating machining conditions, described below, for performing electric discharge machining. The manual input unit 3 has a keyboard equipped with address designating keys for instructions, an input button and function keys, in addition to numeric keys for entering data. Attached to the manual input unit 3 is a CRT display unit 4.

Available as the material constituting the workpiece which is the object of machining performed by the wire-cut electric discharge machine 1 are hardened steel, graphite, aluminum, copper, tungsten steel, and the like. As for the thickness of the wire electrode used in machining, diameters range from 0.05 to 0.25 mm. When setting the machining conditions of a wire-cut electric discharge machine, the machining conditions are uniquely defined by three designated conditions, namely the workpiece material and wire electrode diameter, as mentioned above, and the thickness of the workpiece. If consideration is to be given to the roughness of the machined surface, then the capacitance of the capacitors in the discharge circuit is a designated condition in addition to those given above. The corresponding machining conditions in this case also are uniquely defined.

The present invention is such that if the operator applies these four designated conditions to the wire-cut electric discharge machine system as inputs thereto, the wire-cut electric discharge machine system will itself select machining conditions corresponding to these designated conditions and set these conditions for each of the operating sections of the wire-cut electric discharge machine. To select a single corresponding machining condition from many machining conditions on the basis of four designated conditions, first the four designated conditions are applied, namely (1) workpiece material, (2) workpiece thickness, (3) wire electrode diameter, and (4) capacitance of the discharge circuit capacitors that determine the roughness of the machined surface. These designated conditions are keyed in from the manual data input unit while the screen of the CRT display unit 4 is observed. The control unit 2 retrieves and selects one of the machining conditions based on the designated conditions provided. Parts of the machining condition selected are displayed on the CRT display unit 4 in item-by-item fashion. The machining condition is then read into the working memory 2c. Once this has been accomplished, the machining condition is read out of the memory successively item by item and delivered to each of the operating sections of the wire-cut electric discharge machine 1 via the data output device 2f so that the numerical values may be set for these operating sections. The operator views the machining condition displayed on the CRT display unit 4. If the operator deems the condition inappropriate, he need only repeat the above-described operation to find and set the machining condition desired.

We will now describe the arrangement, and the operating procedure involved, through which the operator provides designated conditions to actually set machining conditions for the wire-cut electric discharge machine automatically.

The operator places the wire-cut electric discharge machine system in an automatic setting mode by a function key on the manual input unit 3, and follows this by pressing a designated condition key. These operations cause four designated conditions to appear on the CRT display unit 4, as shown in Fig. 2. The operator then places a cursor below the "M" of MATERIAL, whereupon material designation numbers will appear on the left side of a comment column at the right of the screen, as well as the names of materials on the right side of the comment column. The operator observes the comment column and keys in the prescribed number, whereupon the material name appears to the right of " = " on the CRT display unit 4. Next, the operator places the cursor below the "T" of THICKNESS. When this is done, "Enter Thickness" appears on the CRT display unit 4 in the comment column. When the operator enters the thickness, the numerical value of the thickness appears to the right of " = " on the CRT display unit 4. When the operator next places the cursor below the "D" of DIAMETER (electrode diameter), electrode diameter designation numbers appear on the left side of the comment column at the right of the screen, as well as the diameters on the right side of the comment column. The operator observes the comment column and keys in the prescribed number, whereupon the wire electrode diameter appears to the right of " = " on the CRT display unit 4. Finally, the operator places the cursor below the "C" of CAPACITY (capacitance of the capacitors), whereupon capacitance designation numbers appear on the left side of the comment column at the right of the screen, as well as the capacitances on the right side of the comment column. The operator observes the comment column and keys in the prescribed number, whereupon the capacitance appears to the right of " = " on the CRT display unit 4. To effect these displays, in the present embodiment use is made of a blank portion of the machining condition memory 2i to store the contents of the comment column that correspond to the four designated conditions. By way of example, when a data input operation for the workpiece material is designated by movement of the cursor, the contents of the comment column corresponding to the workpiece material are read out and displayed on the screen of the CRT display unit 4. When the workpiece material is then designated, the data are displayed on the screen and transferred to the working memory 2c where the data are stored. Thenceforth, the same operation is repeated for the other designated conditions (workpiece thickness, wire electrode diameter, capacitance of discharge capacitors that decide machined surface roughness).

As shown in Fig. 3, set aside in the machining condition memory 2i are a plurality of record areas each having a fixed length of, e.g., 64 bytes and comprising a plurality of data blocks 1 through n. As shown in Fig. 4, a keyword comprising a combination of numbers, namely a material designation number M, an electrode diameter designation number D and a capacitance designation number C, is written into one record area at the head of the leading data block 1 thereof. Written into the data block 1 following the keyword are data which correspond to three of the aforementioned designated conditions and which are unrelated to workpiece thickness, namely "Water Specific Resistance", "On/Off time", "Wire Electrode Feedrate", "Unloaded Voltage", etc. Workpiece thickness is written into the data block 2 at the head thereof. Written in next are "Workpiece Feed Velocity", "Roughness", "Peak Current", "Servo Voltage", "Wire Electrode Tension", etc., which relate to workpiece thickness. A different workpiece thickness is written into the head of the following data block 3. Written into the block next are "Workpiece Feed Velocity", "Roughness", "Peak Current", "Servo Voltage", "Wire Electrode Tension", etc. Data of the aforementioned kind are written into the data blocks 4 through n in similar fashion.

To select based on the four designated conditions stored in the working memory 2c in the above-described manner the machining conditions corresponding thereto, the control unit 2 first goes to the working memory 2c to read out the material designation number M, electrode diameter designation number D and capacitance designation number C entered by the operator, searches the machining condition memory 2i by these keywords to read out the prescribed one record of data, and transfers the record to the working memory 2c. Next, on the basis of the designated workpiece thickness, the control unit 2 selects the corresponding data relating to workpiece thickness from the data blocks 2 through n. The selected data of data block 1 and the data selected from the data of data blocks 2 through n thus constitute the selected machining conditions.

From among these machining conditions, at least the item of data regarding the roughness of the machined surface is displayed on the screen of the CRT display unit 4. If the operator upon viewing this item of data deems from experience that it is inappropriate, he places the cursor below the "C" of CAPACITY on the display screen. This operation will cause the CRT display unit 4 to display the capacitance designation numbers on the left side of the comment column at the right of the screen, and the capacitances on the right side of the comment column. The operator views the comment column and keys in the prescribed number which he considers to be desirable based on his experience. When this is done, the capacitance appears to the right of "=" on the CRT display unit 4 and, at the same time, the control unit 2 repeats operations of the above-described kind to designate new machining conditions.

Machining conditions selected in this way are transferred successively to the wire-cut electric discharge machine 1 through the data output device 2f.

The wire-cut electric discharge machine 1 has a peak current setting circuit which is provided with a digital-analog converter. The converter converts digital data received from the control unit 2 into an analog value by means of which peak current is set. Thereafter, and in similar fashion, the selected machining conditions are set for the various sections of the wire-cut electric discharge machine 1. It should be noted that since setting the capacitance of the capacitors automatically is impossible, the prescribed capacitance is set manually by manipulating a switch, which is provided on the front side of a capacitor box, while one views the screen of the CRT display unit 4.

According to the foregoing embodiment, a desired data block can be selected directly by designating workpiece thickness. However, there are cases where the designated workpiece thickness lies between, say, data block 2 and data block 3. If we take the workpiece feedrate as an example in such case, the workpiece feedrate data would be read from data blocks 2 and 3 and both items of data would be subjected to a linear interpolation to obtain the desired data based thereon.

When the setting of such machining conditions has been completed, the wire-cut electric discharge machine system changes over to the run mode and machines the workpiece in accordance with the machining data recorded on a tape 5.

Since the foregoing embodiment is a wire-cut electric discharge machine which uses a capacitor discharge circuit, capacitance is applied as a designated condition besides workpiece material, wire electrode diameter and workpiece thickness when deciding the machining conditions. However, in a case where the wire-cut electric discharge machine employs a transistor discharge circuit, specifying the workpiece material, wire electrode diameter and workpiece thickness as the designated conditions will uniquely define the machining conditions corresponding thereto. Accordingly, for an embodiment where the wire-cut electric discharge machine uses a transistor discharge circuit, capacitance can be deleted from the designated conditions.

Though the machining condition memory 2i can be composed of a MOS-type ROM, it is convenient to use a large-capacity bubble memory in which data can be reloaded in simple fashion.

It should be noted that if the wire-cut electric discharge machine is changed over to a manual setting mode by operating the manual input unit 3, machining conditions can be set manually as in the manner of an ordinary wire-cut electric discharge apparatus.

## Claims

1. A wire-cut electric discharge machining method using a wire-cut electric discharge machine (1) controlled by a numerical control unit (2) supplied with input signals from a manual input unit (3) coupled to a CRT display unit (4), wherein the numerical control unit (2) comprises a processor (2a) and a machining condition memory (2i) by means of which an operator retrieves stored machining conditions in dependence upon entering via the manual input unit (3) designated conditions relating to a wire-cutting process, these designated conditions including wire electrode thickness and workpiece material, characterised in that said entered designated conditions further include workpiece thickness and the machining condition memory (2i) stores machining conditions in separate single records such that the processor (2a) is operable to retrieve and set a uniquely defined group of machining conditions corresponding to the entered designated conditions and providing a single value of each of these machining conditions when electric discharge machining is performed, and the numerical control unit (2) is operable to set automatically, for operating sections of the wire-cut electric discharge machine (1), the machining conditions retrieved as aforesaid.

2. A wire-cut electric discharge machining method according to claim 1, wherein said entered designated conditions include capacitance.

## Revendications

1. Un procédé d'usinage à décharge électrique à découpe par fil employant une machine à décharge électrique à découpe par fil (1) commandée par une unité de commande numérique (2) recevant des signaux d'entrée provenant d'une unité manuelle d'entrée (3) accouplé à une unité d'affichage à TRC (4), dans lequel l'unité de commande numérique (2) comporte un processeur (2a) et une mémoire (2i) des conditions d'usinage aux moyens desquels un opérateur retrouve des conditions d'usinage stockées en fonction de l'introduction par l'intermédiaire de l'unité manuelle d'entrée (3) de conditions désignées relatives au processus à découpe par fil, ces conditions désignées comprenant l'épaisseur de l'électrode filiforme et la matière de la pièce, caractérisé en ce que les conditions désignées introduites comportent en plus l'épaisseur de la pièce, et la mémoire (2i) des conditions d'usinage stocke des conditions d'usinage dans des enregistrements uniques distincts de façon que le processeur (2a) soit susceptible de retrouver et de déterminer un groupe défini de manière unique de conditions d'usinage correspondant aux conditions désignées introduites et donne une seule valeur de chacune de ces conditions d'usinage lorsque l'usinage par décharge électrique est effectué, l'unité de commande numérique (2) ayant pour fonction de déterminer automatiquement, pour des parties fonctionnelles de la machine à décharge électrique à découpe par fil (1), les conditions d'usinage retrouvées comme indiqué précédemment.

2. Un procédé d'usinage à décharge électrique à découpe par fil selon la revendication 1, dans lequel lesdites conditions désignées introduites comprennent une capacité.

## Ansprüche

1. Bearbeitungsverfahren zum Betrieb einer elektrischen Drahtschnittentladungsmaschine, das eine elektrische Drahtschnittentladungsmaschine (1) benutzt, die durch eine numerische Steuereinheit (2) gesteuert wird, welche mit Eingangssignalen von einer Handeingabeeinheit (3) versorgt wird, die mit einer Katodenstrahlröhren-Anzeigeeinheit (4) verbunden ist, wobei die numerische Steuereinheit (2) einen Prozessor (2a) und einen Bearbeitungszustandsspeicher (2i) umfaßt, mittels denen eine Bedienungsperson gespeicherte Bearbeitungszustände in Abhängigkeit vom Eingeben von bestimmten Zuständen über die Handeingabeeinheit (3) auffindet, die sich auf einen Drahtschnittprozeß beziehen, wobei diese bestimmten Zustände Angaben über eine Drahtelektrodendicke und ein Werkstückmaterial enthalten, dadurch **gekennzeichnet**, daß die eingegebenen bestimmten Zustände ferner Angaben über eine Werkstückdicke enthalten und der Bearbeitungszustandsspeicher (2i) Bearbeitungszustände derart in getrennten einzelnen Datensätzen speichert, daß der Prozessor (2a) betreibbar ist, um eine eindeutig definierte Gruppe von Bearbeitungszuständen, die den eingegebenen bestimmten Zuständen entspricht und einen einzigen Wert jeder dieser Bearbeitungszustände bestimmt, wenn die elektrische Entladungsbearbeitung durchgeführt wird, aufzufinden und zu setzen, und daß die numerische Steuereinheit (2) betreibbar ist, um automatisch für Arbeitsabschnitte der elektrischen Drahtschnittentladungsmaschine (1) die Bearbeitungszustände, wie sie in zuvor genannter Weise aufgefunden sind, zu setzen.

2. Bearbeitungsverfahren zum Betrieb einer elektrischen Drahtschnittentladungsmaschine nach Anspruch 1, bei dem die eingebenen bestimmten Zustände Angaben über eine Kapazität enthalten.

# Fig. 1

EP 0 139 763 B1

# Fig. 2

| | | | | (COMMENT) | |
|---|---|---|---|---|---|
| MATERIAL | = | STEEL1 | 1 | STEEL 1 | |
| THICKNESS | = | 25.000 | 2 | STEEL 2 | |
| DIAMETER | = | 0.200 | 3 | STEEL 3 | |
| CAPACITY | = | 2.00 | 4 | CARBIDE | |
| | | | 5 | COPPER | |
| WIRE FEED | = | 6 | 6 | GRAPHITE | |
| WATER OHM | = | 2 − 3 | 7 | ALUMINUM | |
| FEEDRATE | = | 2.22 − 2.72 | | | |
| ROUGHNESS | = | 18 − 20 | | | |

# Fig.3

| Keyword |
|---|
| Data Block 1 |
| Data Block 2 |
| |
| Data Block n |
| Keyword |

1st Record

2nd Record

# Fig.4

| | C | D | M |
|---|---|---|---|
Keyword

Specific Resistance
On/Off Time
Wire Electrode Feed
Unloaded Voltage

Data Unrelated To Workpiece Thickness

Workpiece Thickness
Workpiece Feedrate
Roughness
Peak Current
Servo Voltage
Wire Electrode Tension

Workpiece Thickness Data 1

Workpiece Thickness
Workpiece Feedrate
Roughness
Peak Current
Servo Voltage
Wire Electrode Tension

Workpiece Thickness Data 2

Workpiece Thickness Data m

| | C | D | M |
|---|---|---|---|